# EUROPÄISCHE PATENTANMELDUNG

(11) **EP 4 818 636 A1**
(43) Veröffentlichungstag der Anmeldung: **07.10.2026**
(21) Anmeldenummer: 25219402.2
(22) Anmeldetag: 28.11.2025
(51) Int. Cl.: G01B 11/14

(54) **VORRICHTUNG UND VERFAHREN ZUM BESTIMMEN EINES ABSTANDES AN EINER LEITUNG**

(30) Priorität: 01.04.2025 DE 102025112625
(71) Anmelder: MD ELEKTRONIK GmbH, 84478 Waldkraiburg (DE)
(72) Erfinder: Meltl, Alexander, 83547 Babensham (DE)

(57) **Zusammenfassung**

Die vorliegende Erfindung betrifft eine Vorrichtung (1) zum Bestimmen eines Abstandes (T) an einer Leitung (2), die zumindest einen Innenleiterkontakt (4) und eine Hülse (10) umfasst, wobei die Vorrichtung (1) zumindest einen Werkstückträger (13) zum Fixieren und Zustellen der Leitung (2) entlang einer ersten Richtung (X), einen Messbereich (15), in dem die Leitung (2) zum Messen des Abstandes (T) angeordnet wird, ein Beleuchtungssystem (20), das zumindest teilweise um den Messbereich (15) herum angeordnet ist, zum gleichmäßigen Ausleuchten des Messbereichs (15), ein Messsystem (40), das auf den Messereich (15) gerichtet ist, zum kontaktlosen Messen des Abstands (T) zwischen einer Spitze (5) des zumindest einen Innenleiterkontaktes (4) und einem Referenzpunkt (12) der Hülse (10), und eine Führung (30) aufweist, die in dem Messbereich (15) angeordnet ist, zum Führen des zumindest einen Innenleiterkontaktes (4) der Leitung (2) entlang der ersten Richtung (X). Die vorliegende Erfindung betrifft weiterhin ein Verfahren zum Bestimmen eines Abstandes (T) an einer Leitung (2).

## Beschreibung

### Technisches Gebiet

Die Erfindung betrifft eine Vorrichtung und ein Verfahren zum Bestimmen eines Abstandes an einer Leitung, bevorzugt in der automatisierten Leitungskonfektion.

### Stand der Technik

In der Leitungskonfektion, d.h. der Verbindung einer Leitung mit zumindest einer Steckverbinder-Komponente, ist es notwendig bestimmte Abstände an einer (teilkonfektionierten) Leitung zu bestimmen. Eine teilkonfektionierte Leitung umfasst eine Leitung, an der beispielsweise bereits Innenleiterkontakte angebracht sind. Bei einer Leitung mit Innenleiterkontakten kann ein solcher Abstand die Entfernung von den Innenleiterkontaktspitzen bis zu einer Crimphülse oder Stützhülse (allgemein Hülse) umfassen. Im Stand der Technik ist beschrieben, wie Schirmgeflecht der Leitung, an einer den Innenleiterkontakten zugewandten ersten Seite, auf die Hülse umgeschlagen wird, anschließend die Hülse mit der ersten Seite und dem umgeschlagenen Schirmgeflecht gegen einen Anschlag, der als Referenzkante dient, gedrückt wird, und schließlich ein Abstand zwischen der Referenzkante und den Innenleiterspitzen bestimmt wird.

Das Vorgehen im Stand der Technik weist jedoch zumindest die Nachteile auf, dass das zwischen Referenzkante und erster Seite eingeklemmte Schirmgeflecht zu Ungenauigkeiten bei der Abstandsmessung führt. Weiterhin wird die Hülse durch das Andrücken gegen den Anschlag oftmals entlang der Leitung verschoben, was wiederum zu Ungenauigkeiten führt.

### Beschreibung der Erfindung

Es ist daher eine Aufgabe der vorliegenden Erfindung eine Vorrichtung und ein Verfahren bereitzustellen mit denen eine höhere Präzision beim Messen eines Abstands bei der Leitungskonfektion erreicht werden kann.

Die oben genannte Aufgabe wird durch eine Vorrichtung nach Anspruch 1 sowie einem Verfahren nach Anspruch 8 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch eine Vorrichtung zum Bestimmen eines Abstandes an einer Leitung, die zumindest einen Innenleiterkontakt und eine Hülse umfasst, wobei die Vorrichtung zumindest einen Werkstückträger zum Fixieren und Zustellen der Leitung entlang einer ersten Richtung, einen Messbereich, in dem die Leitung zum Messen des Abstandes angeordnet wird, ein Beleuchtungssystem, das zumindest teilweise um den Messbereich herum angeordnet ist, zum gleichmäßigen Ausleuchten des Messbereichs, ein Messsystem, das auf den Messereich gerichtet ist, zum kontaktlosen Messen des Abstands zwischen einer Spitze des zumindest einen Innenleiterkontaktes und einem Referenzpunkt der Hülse, und eine Führung aufweist, die in dem Messbereich angeordnet ist, zum Führen des zumindest einen Innenleiterkontaktes der Leitung entlang der ersten Richtung.

Die vorliegende Vorrichtung weist zumindest den Vorteil auf, dass durch die Führung ein ungewolltes Abknicken des zumindest einen Innenleiterkontaktes in einer Richtung quer zur ersten Richtung, insbesondere einer dritten Richtung, verhindert wird. Die dritte Richtung verläuft insbesondere entlang der Blickrichtung des Messsystems, wobei ein Abknicken des zumindest einen Innenleiterkontaktes in diese Richtung vom Messsystem nicht erkannt werden kann, und zu Ungenauigkeiten bei der Abstandsmessung führt. Die Führung ist dabei direkt in dem Messbereich angeordnet, um ein Abknicken auch während einer Messung zu verhindern. Das Beleuchtungssystem ist zumindest teilweise um den Messbereich herum angeordnet, was bedeutet, dass zumindest an zwei unterschiedlichen Punkten im Raum eine Leuchtquelle, wie eine LED, angeordnet ist, so dass die zumindest zwei Leuchtquellen den Messbereich gleichmäßig ausleuchten. Gleichmäßig ausleuchten bedeutet in diesem Zusammenhang, dass der Messbereich mit einer gleichmäßigen und/oder gleichverteilten Lichtintensität beleuchtet wird. Über das kontaktlose Messen wird eine präzise und beschädigungsfreie Messung des Abstands erreicht.

Bevorzugt wird der Abstand zwischen der Spitze des zumindest einen Innenleiterkontaktes und einer Hinterkante der Hülse, die auf einer dem zumindest einen Innenleiterkontakt abgewandten Seite der Hülse angeordnet ist, gemessen. Die Spitze des zumindest einen Innenleiterkontaktes ist gut zu erkennen und daher als Messpunkt geeignet. Die Hinterkante der Hülse ist freiliegend und gut sichtbar, so dass sie gut als Referenzpunkt geeignet ist. Der Abstand ist gut mit (optischen) Messsystemen messbar.

Bevorzugt erzeugt das Beleuchtungssystem eine indirekte Beleuchtung der dem Messsystem zugewandten Seite der Leitung. Eine indirekte Beleuchtung hat den Vorteil, dass unterschiedliche Lichtverhältnisse entlang der Leitung im Messbereich vermieden werden und im Wesentlichen homogene Lichtverhältnisse herrschen. Homogene Lichtverhältnisse verhindern Messfehler aufgrund unpassender Beleuchtung.

Bevorzugt umfasst das Beleuchtungssystem zumindest eine erste und eine zweite Leuchteinheit, die auf die Innenoberfläche eines Doms gerichtet sind, und ein diffuses Auflicht erzeugen. Auflicht bedeutet, dass das Messobjekt, im vorliegenden Fall die Leitung im Messbereich, aus der gleichen Richtung beleuchtet wird, aus der auch das Messsystem zur Messung des Abstandes auf die Leitung gerichtet ist. Die Reflexion des Lichts von der ersten und zweiten Leuchteinheit an der Innenoberfläche des Doms bildet homogene Lichtverhältnisse im Messbereich, was Messfehler aufgrund unpassender Beleuchtung vermeidet. Ein diffuses Licht ist im Wesentlichen ein breit gestreutes Licht, dass eine homogene Beleuchtung ermöglicht.

Bevorzugt weist die Vorrichtung weiterhin eine dritte Leuchteinheit auf, die ein Durchlicht der Leitung auf das Messsystem erzeugt. Ein Durchlicht ist zumindest teilweise entgegen der Blickrichtung des Messsystems gerichtet. Ein Durchlicht beleuchtet den Hintergrund, auf einer dem Messsystem abgewandten Seite, des Messobjekts. Mit einem Durchlicht können sehr gut (Außen-)Kanten eines Messobjekts erkannt werden, was beispielsweise für eine präzise Erkennung der Spitzen der Innenleiterkontakte günstig ist.

Bevorzugt umfasst die Führung eine Bohrung, die ein Ausrichten des zumindest einen Innenleiterkontaktes entlang der ersten Richtung bewirkt.

Bevorzugt weist die Führung eine Öffnung auf, so dass die Spitze des zumindest einen Innenleiterkontaktes von dem Messsystem erfasst werden kann. Die Öffnung ist bevorzugt eine Aussparung, durch die gegebenenfalls Durchlicht der dritten Leuchteinheit durchscheinen kann. Die Öffnung ermöglicht das Messen bzw. Erkennen der Spitze des zumindest einen Innenleiters, wenn sich der zumindest eine Innenleiterkontakt in der Führung befindet.

Die oben genannte Aufgabe wird weiterhin insbesondere gelöst durch ein Verfahren zum Bestimmen eines Abstandes an einer Leitung, die zumindest einen Innenleiterkontakt und eine Hülse umfasst, mit einer Vorrichtung zum Messen des Abstandes, wobei das Verfahren zumindest die folgenden Schritte aufweist: Bereitstellen der Leitung in einem Messbereich der Vorrichtung mit Hilfe eines Werkstückträgers entlang einer ersten Richtung (X), beim Bereitstellen, Einführen des zumindest einen Innenleiterkontaktes in eine Führung, die in dem Messbereich angeordnet ist, bis eine Spitze des zumindest einen Innenleiterkontaktes in einer Öffnung an der Führung sichtbar ist, gleichmäßiges Ausleuchten des Messbereichs durch ein Beleuchtungssystem, und kontaktloses Messen des Abstands zwischen der Spitze des zumindest einen Innenleiterkontaktes und einem Referenzpunkt der Hülse durch ein Messsystem.

Das vorliegende Verfahren weist zumindest den Vorteil auf, dass die Leitung so wenig wie möglich berührt wird und dennoch eine Ungenauigkeit, die durch ein Abknicken des zumindest einen Innenleiterkontaktes quer zur ersten Richtung, insbesondere entlang einer dritten Richtung, hervorgerufen werden kann, verhindert wird. Das vorliegende Verfahren beschädigt die Leitung nicht. Insbesondere erfolgt das kontaktlose Messen quer, bevorzugt senkrecht, zur ersten Richtung.

Bevorzugt findet in den Schritten Bereitstellen und Messen kein Anschlag der Leitung entlang der ersten Richtung statt. Dadurch, dass die zu vermessende Leitung keinen Anschlag entlang der ersten Richtung erfährt, tritt kein ungewolltes Verschieben der Hülse wie im Stand der Technik auf. Die Messung des gesuchten Abstands ist so präziser. Weiterhin erfolgt kein Stauchen des Schirmgeflechts, wie im Stand der Technik. Da das Schirmgeflecht keinen Einfluss auf die vorliegende Messung hat, ist die Abstandsmessung präziser. Weiterhin wird das Schirmgeflecht nicht unnötig verformt, was eine gegebenenfalls weitere Bearbeitung oder Konfektionierung der Leitung erleichtert.

Bevorzugt wird das gleichmäßige Ausleuchten durch ein Auflicht mit Hilfe von zumindest einer ersten und einer zweiten Leuchteinheit, oder zusätzlich durch ein Durchlicht mit Hilfe einer dritten Leuchteinheit, an der Leitung erzeugt.

Bevorzugt umfasst das kontaktlose Messen ein Aufnehmen eines Bildes, bevorzugt im sichtbaren Spektrum, und eine computergestützte Bildanalyse zum Bestimmen des Abstands. Die genannten Verfahrensschritte sind einfach umzusetzen und ermöglichen eine genaue Bestimmung des gesuchten Abstands.

Die folgende Beschreibung von Ausführungsformen erfolgt unter Bezugnahme auf die begleitenden Figuren. Dabei zeigt:
- Fig. 1: eine perspektivische Ansicht einer Ausführungsform der Vorrichtung mit einer eingelegten Leitung und eine Ausführungsform der Vorrichtung ohne eine eingelegte Leitung; und
- Fig. 2: eine Draufsicht der Ausführungsform aus Fig. 1 mit eingelegter Leitung.
Im Folgenden werden bevorzugte Ausführungsformen im Detail mit Bezug auf die beigefügten Figuren beschrieben.

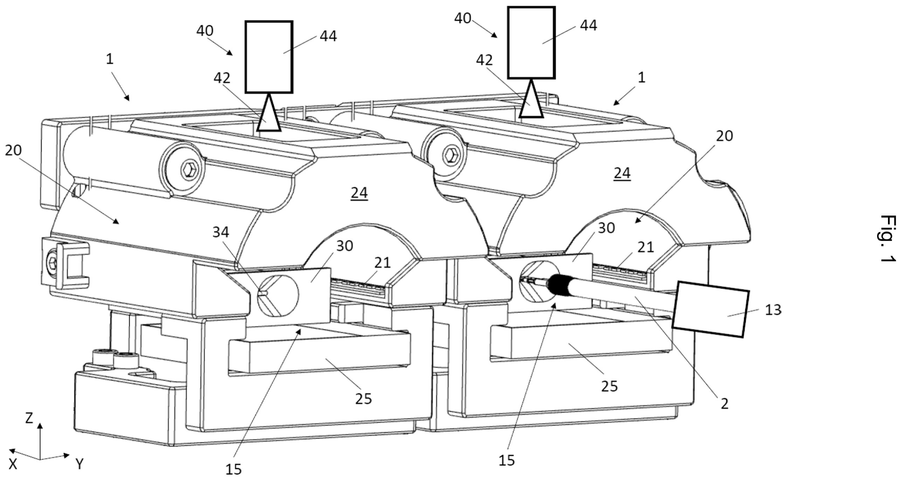

Fig. 1 zeigt eine Ausführungsform einer Vorrichtung 1 zum Bestimmen eines Abstandes T an einer Leitung 2. Genau genommen zeigt Fig. 1 zweimal eine Ausführungsform der Vorrichtung 1, einmal ohne eine eingelegte Leitung 2 (links in Fig. 1) und einmal mit einer eingelegten Leitung 2 (rechts in Fig. 1). Die beiden nebeneinander angeordneten Vorrichtungen 1 ermöglichen in der Praxis ein gleichzeitiges Messen des Abstandes T an beiden Enden einer Leitung 2. Das gleichzeitige Messen der beiden Leitungsenden vereinfacht den Messablauf, insbesondere in der automatisierten Leitungskonfektion. Der Abstand T wird bevorzugt zwischen den Spitzen 5 der Innenleiterkontakte 4 und einer Hinterkante 12 der Hülse 10 gemessen, die auf einer den Innenleiterkontakten 4 abgewandten Seite der Hülse 10 angeordnet ist. Zur Messung des Abstands T ist eine gute Sichtbarkeit der Hinterkante 12 erforderlich.

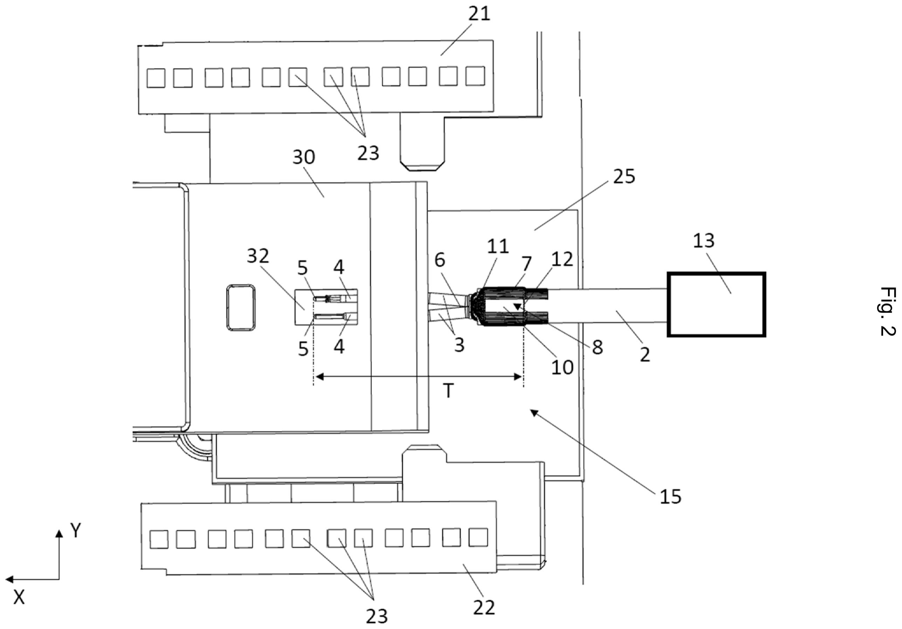

Die dargestellte Leitung 2 umfasst zwei Innenleiterkontakte 4 und eine Hülse 10. Die zwei Innenleiterkontakte 4 sind jeweils mit einem Innenleiter 3 der Leitung 2 verbunden. Die Innenleiter 3 sind in einem Endbereich der Leitung 2 freiliegend und können ab einer Wurzel 6 unterschiedlich im Raum ausgerichtet sein. Die Hülse 10 ist auf der Leitung 2, in einem Bereich, in dem die Innenleiter 3 nicht freigelegt sind, befestigt. Die Hülse 10 umfasst eine Vorderkante 11, die den Innenleitern 3 zugewandt ist und eine Hinterkante 12, die auf einer den Innenleitern 3 abgewandten Seite angeordnet ist. Das Schirmgeflecht 7 der Leitung 2, dass zumindest teilweise aus dem Bereich der freigelegten Innenleiter 3 kommt, ist weg von den Innenleitern 3 über die Hülse 10 und Leitung 2 gebürstet. Zusätzlich weist die Hülse 10 einen Bereich 8 ohne Schirmgeflecht 7 auf. Das Schirmgeflecht 7 wurde in dem Bereich 8 beispielsweise durch besonderes Bürsten entfernt. In dem Bereich 8 ist insbesondere die Hinterkante 12 der Hülse 10 sichtbar (s. Fig. 2).

Die in Fig. 1 und Fig. 2 dargestellte Vorrichtung 1 weist zumindest einen Werkstückträger 13 zum Fixieren und Zustellen der Leitung 2 entlang einer ersten Richtung X auf. In einer bevorzugten Ausführungsform ist die Leitung 2 in einem Abschnitt, der auf der Innenleiter-abgewandten Seite der Hülse 10 liegt, in dem Werkstückträger 13 temporär geklemmt. Die Zustellung entlang der ersten Richtung X kann beispielhaft durch einen Lineartransfer oder einen Manipulator erfolgen.

Die dargestellte Vorrichtung 1 weist weiterhin einen Messbereich 15 auf, in dem die Leitung 2 zum Messen des Abstandes T angeordnet wird. Der Messbereich 15 beschreibt im Wesentlichen ein Volumen, in dem die Leitung 2 frei, d.h. ohne einen Anschlag oder ähnliches angeordnet wird.

Die dargestellte Vorrichtung 1 weist weiterhin ein Beleuchtungssystem 20 auf, das zumindest teilweise um den Messbereich 15 herum angeordnet ist. Der Ausdruck, "um den Messbereich herum angeordnet" meint, dass das Beleuchtungssystem 20 nicht nur eine einzige punktförmig Leuchtquelle umfasst, sondern mindestens eine Leuchtquelle umfasst, die sich entlang von zumindest zwei Raumachsen ausdehnt, oder die zwei separate Leuchtquellen aufweist, die beabstandet voneinander angeordnet sind, so dass eine Fläche oder ein Volumen, wie der Messbereich 15, aus unterschiedlichen Raumwinkeln (beispielsweise entlang der ersten und einer zweiten Richtung X, Y) beleuchtet wird. Das Beleuchtungssystem 20 ist zum gleichmäßigen Ausleuchten des Messbereichs 15 eingerichtet. Insbesondere erzeugt das Beleuchtungssystem 20 eine indirekte Beleuchtung der dem Messsystem 40 zugewandten Seite der Leitung 2. Die indirekte Beleuchtung wird bevorzugt erzeugt, indem das Beleuchtungssystem 20 zumindest eine erste und eine zweite Leuchteinheit 21, 22 umfasst, die auf die Innenoberfläche eines Doms 24 gerichtet sind, und ein diffuses Auflicht erzeugen. In der dargestellten Ausführungsform umfasst das Beleuchtungssystem 20 zwei gegenüberliegende Reihen von LEDs 23, die entlang der ersten Richtung X beidseitig der eingeführten Leitung 2 innerhalb eines Doms 24 angeordnet sind. Das in den Fig. 1 und Fig. 2 dargestellte Beleuchtungssystem 20 umfasst weiterhin eine dritte Leuchteinheit 25, die ein Durchlicht der Leitung 2 auf das Messsystem 40 erzeugt.

Die dargestellte Vorrichtung 1 umfasst weiterhin ein Messsystem 40, das auf den Messereich 15 gerichtet ist, zum kontaktlosen Messen des Abstands T zwischen Spitzen 5 der dargestellten zwei Innenleiterkontakte 4 und einem Referenzpunkt 12 der Hülse 10. Das dargestellte Messsystem 40 umfasst zumindest einen optischen Sensor 42, wie eine Kamera im sichtbaren Spektrum, und einen Computer 44. Der Computer 44 dient insbesondere zur Datenauswertung und -analyse der vom optischen Sensor 42 aufgenommenen Bilddaten. Der Begriff "Computer" umfasst dabei jegliche digitale Rechen- und/oder Auswerteeinheit. Insbesondere ist das Messsystem 40 quer zur ersten Richtung X, bevorzugt entlang der dritten Richtung Z, ausgerichtet. Die dritte Leuchteinheit 25 ist bevorzugt ebenfalls entlang der dritten Richtung Z gegenüber dem Messsystem 40 angeordnet. Um das Durchlicht zu erzeugen, strahlt die dritte Leuchteinheit 25 zumindest teilweise entlang der dritten Richtung Z auf das Messsystem 40 bzw. dessen optischen Sensor 42.

Weiterhin umfasst die Vorrichtung 1 eine Führung 30, die in dem Messbereich 15 angeordnet ist. Bevorzugt ist die Führung 30 mittig in dem Messbereich 15 angeordnet. Die Führung 30 ist in der dargestellten Ausführungsform eingerichtet zum Führen der zwei Innenleiterkontakte 4 der Leitung 2 entlang der ersten Richtung X. In der Praxis werden die Innenleiterkontakte 4 bevorzugt waagerecht zur Leitung 2 ausgerichtet, um eine möglichst exakte Messung des Abstandes T zu erhalten. Die dargestellte Führung 30 umfasst zumindest eine Bohrung 34, die ein Ausrichten der Innenleiterkontakte 4 entlang der ersten Richtung X bewirkt. Insbesondere dient die Bohrung 34 der Einhaltung eines vorbestimmten Pitchabstandes der Innenleiterkontakte 4. Zum leichteren Einführen der Innenleiterkontakte 4 in die Bohrung 34 kann die Führung 30 eine Verjüngung oder einen Trichter aufweisen (s. Fig. 1). Weiterhin weist die in Fig. 2 dargestellte Führung 30 eine Öffnung 32 auf. Die Öffnung 32 ist angeordnet, so dass die Spitzen 5 der zwei Innenleiterkontakte 4, die in der Führung 30 angeordnet wurden, von dem Messsystem 40 erfasst werden können. Insbesondere ist die Öffnung 32 durchlässig für Durchlicht der dritten Leuchteinheit 25. Die Öffnung 32, insbesondere eine Kante der Öffnung 32, die quer zu den Innenleiterkontakten 4 ausgerichtet ist, kann zusätzlich als Referenz für Abstandsmessungen dienen.

Im Folgenden wird eine bevorzugte Ausführungsform eines Verfahrens zum Bestimmen eines Abstandes T an einer Leitung 2 beschrieben. Die zu vermessende Leitung 2 umfasst zwei Innenleiterkontakte 4 und eine Hülse 10. Das Verfahren wird bevorzugt mit der Vorrichtung 1 zum Messen des Abstandes T durchgeführt. Das Verfahren weist zumindest die folgenden Schritte auf: Zunächst erfolgt ein Bereitstellen der Leitung 2 in einem Messbereich 15 der Vorrichtung 1 mit Hilfe eines Werkstückträgers 13 entlang einer ersten Richtung X. Die Zustellung kann manuell oder automatisiert durchgeführt werden. Beim Bereitstellen erfolgt ein Einführen der dargestellten zwei Innenleiterkontakte 4 in eine Führung 30, die in dem Messbereich 15 angeordnet ist. Das Einführen in die Führung 30 wird so lange fortgeführt, bis Spitzen 5 der dargestellten zwei Innenleiterkontakte 4 in einer Öffnung 32 an der Führung 30 sichtbar sind. Die Sichtbarkeit der Spitzen 5 ist für die Messung des Abstandes T wichtig. Zumindest während des Messens erfolgt ein gleichmäßiges Ausleuchten des Messbereichs 15 durch ein Beleuchtungssystem 20. In einer bevorzugten Ausführungsform erfolgt während des Betriebs der Vorrichtung 1 dauerhaft ein Ausleuchten des Messbereichs 15, beispielsweise mittels LEDs 23 in der ersten und zweiten Leuchteinheit 21, 22. Wenn das Einführen gestoppt ist und die Leitung 2 in Ruhe bleibt, erfolgt ein kontaktloses Messen des Abstands T zwischen den Spitzen 5 der zwei Innenleiterkontakte 4 und einem Referenzpunkt 12 der Hülse 10 durch ein Messsystem 40. Das kontaktlose Messen wird in der dargestellten Ausführungsform durch einen optischen Sensor 42 mit anschließender Auswertung der Bilddaten durch einen Computer 44 durchgeführt. Das kontaktlose Messen umfasst ein Aufnehmen eines Bildes, bevorzugt im sichtbaren Spektrum, und eine computergestützte Bildanalyse zum Bestimmen des Abstands T. Zur Bestimmung des Abstandes T wird die Hinterkante 12 an der Hülse 10 erfasst. Senkrecht von der Hinterkante 12 wird eine (gedachte) Hilfslinie gezogen bis zu einer weiteren (gedachten) Hilfslinie, die parallel zur Hinterkante 12 an den Spitzen 5 der Innenleiter 4 liegt (s. Fig. 2). In einer bevorzugten Ausführungsform gibt es für den Abstand T Toleranzen, wobei in einer Messung bestimmt wird, ob der Abstand T der vorliegenden Messung innerhalb der Toleranzen liegt oder nicht.

Für die Messung sind sowohl die Spitzen 5 der Innenleiterkontakte 4 sowie die Hülse 10 vollständig in einer Bildaufnahme des optischen Sensors 42 enthalten. Insbesondere findet in den Schritten Bereitstellen der Leitung 2 und Messen des Abstands T kein Anschlag der Leitung 2 entlang der ersten Richtung X statt. Auf diese Weise erhält man eine stabile Messung des Abstandes T. Da die Leitung 2 in der Führung 30 bzw. der Bohrung 34 geführt wird und insbesondere in der Waagerechten entlang der ersten Richtung X gehalten wird, kann entlang der zweiten und/oder dritten Richtung Y, Z ein Anliegen der Innenleiterkontakte 4 auftreten. Entlang der ersten Richtung X ist die dargestellte Leitung 2 jedoch völlig frei in ihrer Bewegung, und wird nur durch den Werkstückträger 13 auf Position gehalten.

Nach einer Messung wird die Leitung 2 durch den Werkstückträger 13, bevorzugt entlang der ersten Richtung X entgegen der Einführrichtung, aus der Vorrichtung 1 entfernt. Die Leitung 2 kann einem weiteren Prozessschritt zugeführt werden und eine neue Leitung 2 kann an der Vorrichtung 1 bereitgestellt werden.

### BEZUGSZEICHENLISTE

- 1: Vorrichtung
- 2: Leitung
- 3: Innenleiter
- 4: Innenleiterkontakte
- 5: Spitzen
- 6: Wurzel
- 7: Schirmgeflecht
- 8: Bereich
- 10: Hülse
- 11: Vorderkante
- 12: Referenzpunkt/Hinterkante
- 13: Werkstückträger
- 15: Messbereich
- 20: Beleuchtungssystem
- 21: erste Leuchteinheit
- 22: zweite Leuchteinheit
- 23: LED
- 24: Dom
- 25: dritte Leuchteinheit
- 30: Führung
- 32: Öffnung
- 34: Bohrung
- 40: Messsystem
- 42: optischer Sensor
- 44: Computer
- T: Abstand
- X: erste Richtung
- Y: zweite Richtung
- Z: dritte Richtung

## Patentansprüche

1. Vorrichtung (1) zum Bestimmen eines Abstandes (T) an einer Leitung (2), die zumindest einen Innenleiterkontakt (4) und eine Hülse (10) umfasst, wobei die Vorrichtung (1) zumindest aufweist:
a. einen Werkstückträger (13) zum Fixieren und Zustellen der Leitung (2) entlang einer ersten Richtung (X);
b. einen Messbereich (15), in dem die Leitung (2) zum Messen des Abstandes (T) angeordnet wird;
c. ein Beleuchtungssystem (20), das zumindest teilweise um den Messbereich (15) herum angeordnet ist, zum gleichmäßigen Ausleuchten des Messbereichs (15);
d. ein Messsystem (40), das auf den Messereich (15) gerichtet ist, zum kontaktlosen Messen des Abstands (T) zwischen einer Spitze (5) des zumindest einen Innenleiterkontaktes (4) und einem Referenzpunkt (12) der Hülse (10); und
e. eine Führung (30), die in dem Messbereich (15) angeordnet ist, zum Führen des zumindest einen Innenleiterkontaktes (4) der Leitung (2) entlang der ersten Richtung (X).

2. Vorrichtung nach Anspruch 1, bei dem der Abstand (T) zwischen der Spitze (5) des zumindest einen Innenleiterkontaktes (4) und einer Hinterkante (12) der Hülse (10), die auf einer dem zumindest einen Innenleiterkontakt (4) abgewandten Seite der Hülse (10) angeordnet ist, gemessen wird.

3. Vorrichtung nach Anspruch 1 oder 2, bei dem das Beleuchtungssystem (20) eine indirekte Beleuchtung der dem Messsystem (40) zugewandten Seite der Leitung (2) erzeugt.

4. Vorrichtung nach Anspruch 3, bei dem das Beleuchtungssystem (20) zumindest eine erste und eine zweite Leuchteinheit (21, 22) umfasst, die auf die Innenoberfläche eines Doms (24) gerichtet sind, und ein diffuses Auflicht erzeugen.

5. Vorrichtung nach einem der Ansprüche 1 - 4, weiterhin aufweisend eine dritte Leuchteinheit (25), die ein Durchlicht der Leitung (2) auf das Messsystem (40) erzeugt.

6. Vorrichtung nach einem der Ansprüche 1 - 5, bei dem die Führung (30) eine Bohrung (34) umfasst, die ein Ausrichten des zumindest einen Innenleiterkontaktes (4) entlang der ersten Richtung (X) bewirkt.

7. Vorrichtung nach Anspruch 6, bei dem die Führung (30) eine Öffnung (32) aufweist, so dass die Spitze (5) des zumindest einen Innenleiterkontaktes (4) von dem Messsystem (40) erfasst werden kann.

8. Verfahren zum Bestimmen eines Abstandes (T) an einer Leitung (2), die zumindest einen Innenleiterkontakt (4) und eine Hülse (10) umfasst, mit einer Vorrichtung (1) zum Messen des Abstandes (T), bevorzugt nach einem der Ansprüche 1 - 7, wobei das Verfahren zumindest die folgenden Schritte aufweist:
a. Bereitstellen der Leitung (2) in einem Messbereich (15) der Vorrichtung (1) mit Hilfe eines Werkstückträgers (13) entlang einer ersten Richtung (X);
b. beim Bereitstellen, Einführen des zumindest einen Innenleiterkontaktes (4) in eine Führung (30), die in dem Messbereich (15) angeordnet ist, bis eine Spitze (5) des zumindest einen Innenleiterkontaktes (4) in einer Öffnung (32) an der Führung (30) sichtbar ist;
c. gleichmäßiges Ausleuchten des Messbereichs (15) durch ein Beleuchtungssystem (20); und
d. kontaktloses Messen des Abstands (T) zwischen der Spitze (5) des zumindest einen Innenleiterkontaktes (4) und einem Referenzpunkt (12) der Hülse (10) durch ein Messsystem (40).

9. Verfahren nach Anspruch 8, bei dem in den Schritten Bereitstellen und Messen kein Anschlag der Leitung (2) entlang der ersten Richtung (X) stattfindet.

10. Verfahren nach Anspruch 8 oder 9, bei dem das kontaktlose Messen ein Aufnehmen eines Bildes, bevorzugt im sichtbaren Spektrum, und eine computergestützte Bildanalyse zum Bestimmen des Abstands (T) umfasst.
